# EUROPEAN PATENT SPECIFICATION

(11) **EP 3 953 209 B1**
(45) Date of publication and mention of the grant of the patent: **16.08.2023**
(21) Application number: 20788147.5
(22) Date of filing: 02.04.2020
(51) Int. Cl.: B62H 5/00, B62J 43/13, B62K 3/00, B62K 19/30, B62J 43/23, B62J 43/28

(54) **ELECTRIC PERSONAL MOBILITY DEVICE**
ELEKTRISCHE PERSÖNLICHE MOBILITÄTSVORRICHTUNG
DISPOSITIF ÉLECTRIQUE PERSONNEL DE MOBILITÉ

(30) Priority: 12.04.2019 CN 201910292447
(43) Date of publication of application: 16.02.2022
(73) Proprietor: Grabtaxi Holdings Pte. Ltd., Singapore 138498 (SG)
(72) Inventor: WU, Xihu, Beijing (CN); YAN, Kang, Beijing (CN); YU, Pengfei, Beijing (CN); ZHENG, Yi, Kirkland Washington, 98033 (US)
(74) Representative: Viering, Jentschura & Partner mbB Patent- und Rechtsanwälte
(86) International application number: PCT/SG2020/050206
(87) International publication number: WO 2020/209792

(56) References cited:
- EP-B1- 0 741 060
- WO-A1-2014/154295
- CN-A- 108 422 874
- CN-A- 109 830 012
- CN-U- 208 393 095
- CN-U- 208 580 466
- CN-U- 208 674 202
- GB-A- 2 480 753
- US-A- 5 775 452
- US-A1- 2003 029 652

## Description

### Technical Field

Various embodiments generally relate to an electric personal mobility device, an electric personal mobility device sharing system and a method of operating an electric personal mobility device sharing system. In particular, various embodiments generally relate to an electric personal mobility device capable of battery swapping, an electric personal mobility device sharing system with the electric personal mobility device having battery swapping capability, and a method of operating an electric personal mobility device sharing system with the electric personal mobility device having battery swapping capability.

### Background

Electric personal mobility device sharing, such as electric scooter sharing, is a new but exciting industry. It is the new frontier for transportation, with the promises to relieve urban congestion, speed up commute time, reduce carbon emission, and making commute fun. The economies largely depends on charging, which is 50% of the operations expense and the most critical differentiating factor for consumer user experience. It also limits Rides Per Day, RPD, directly - the most important measure on how effective and efficient sharing is. If scooters are not well charged, it will limit the number of rides it generates on a daily basis.

In the US, electric scooter operators have largely solved the issue by employing "Juicers" to "crowdsource" charging. These are gig economy workers who are freelancers or just regular consumers. They pick up low charge electric scooters, charge them at home, and redeploy them for a reward. Sometimes, the electric scooter operators limit the maximum number of electric scooters they can charged per night.

However, charging electric scooters at home by regular consumers can be a major fire hazard, given consumers are not professionally trained and have limited experience with troubleshooting electric and battery issues. Thus, in some countries, Authorities and Regulatory Controls have banned such practice.

US 5,775,452A discloses the provision of an electric-powered scooter that provides the lowest centre of gravity for maximum stability, whereby batteries are held to the underside of the scooter platform by battery holding brackets fixedly secured to the platform by bolts and nuts. However, the battery is not easily replaceable or swappable for addressing the aforementioned charging issues.

Accordingly, there is a need for an efficient and safe solution for the electric scooter operators to address the battery charging issue. Document GB 2 480 753 A discloses a personal mobility device according to the preamble of claim 1.

### Summary

According to various embodiments, there is provided an electric personal mobility device. The electric personal mobility device includes a main body including a rider-support-platform structure and a steering column coupled to the rider-support-platform structure. The electric personal mobility device further includes a wheel arrangement supporting the main body. The wheel arrangement has at least one front wheel and at least one rear wheel. The at least one front wheel configured to be steerable by the steering column. According to various embodiments, the rider-support-platform structure includes an elongate hollow housing structure enclosing an internal space partitioned to define a first and second longitudinal-internal-battery-compartments. Each longitudinal-internal-battery-compartment extending lengthwise along respective longitudinal side of the elongate hollow housing and having a respective rear opening at an aft portion of the elongate hollow housing structure. The rider-support-platform structure includes a rear-wheel-fork fixedly extending longitudinally from the aft portion of the elongate hollow housing structure between the rear openings of the first and second longitudinal-internal-battery-compartments. The rear-wheel-fork holding the at least one rear wheel.

According to various embodiments the rider support platform comprises a single-rear-cover openable and closeable relative the rear openings of the first and second longitudinal-internal-battery-compartments, the single-rear-cover comprising a first and second closure portions corresponding to the respective rear openings of the first and second longitudinal-internal-battery-compartments so as to simultaneously engage with the respective rear openings to conceal the respective rear openings when the single-rear-cover is closed and to simultaneously disengage from the respective rear openings to expose the respective rear openings when the single-rear-cover is opened.

According to various embodiments, there is provided a personal mobility device sharing system including the electric personal mobility device as described herein. The system may further include a battery charging station configured to charge a standalone battery pack removed from the electric personal mobility device.

According to various embodiments, there is provided a method of operating a personal mobility device sharing system including providing the electric personal mobility as described herein. The method performing battery charging of a standalone battery pack removed from the electric personal mobility device at a battery charging station.

### Brief description of the drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1A and FIG. 1B show schematic diagrams (side view and rear view) of an electric personal mobility device according to various embodiments;
FIG. 2A to FIG. 2D show schematic diagrams (side views and rear views) of an electric personal mobility device according to various embodiments;
FIG. 3A to FIG. 3F show various views of an electric personal mobility device according to various embodiments;
FIG. 4A and FIG. 4B show close up view of the rear of the rider-support-platform structure of the electric personal mobility device of FIG. 3A to FIG. 3F according to various embodiments;
FIG. 4C and FIG. 4D show cut out views of the rear of the rider-support-platform structure as shown in FIG. 4A and FIG. 4B according to various embodiments;
FIG. 5A, FIG. 5B, and FIG. 5C show various views of each of the first and second elongate batteries 372, 374 according to various embodiments; and
FIG. 6 shows a cross-section of the elongate hollow housing structure of the electric personal mobility device of FIG. 3A to FIG. 3F according to various embodiments.

### Detailed description

Embodiments described below in the context of the apparatus are analogously valid for the respective methods, and vice versa. Furthermore, it will be understood that the embodiments described below may be combined, for example, a part of one embodiment may be combined with a part of another embodiment.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless context clearly indicates otherwise. Similarly, the word "or" is intended to include "and" unless the context clearly indicates otherwise.

Various embodiments generally relate to an electric personal mobility device, an electric personal mobility device sharing system and a method of operating an electric personal mobility device sharing system. In particular, various embodiments generally relate to an electric personal mobility device capable of battery swapping, an electric personal mobility device sharing system with battery swapping capability, and a method of operating an electric personal mobility device sharing system with battery swapping capability. Various embodiments generally relate to hardware implementation of the electric personal mobility device to address the battery charging issue. According to various embodiments, the electric personal mobility device may include, but not limited to, electric scooter, powered scooter, electric kick scooter, or powered kick scooter, etc. According to various embodiments, the electric personal mobility device may be configured as a vehicle that is to be used by a user, has two or more wheels, is propelled or can be selectively propelled by an electric motor attached to the vehicle. According to various embodiments, the electric personal mobility device may be configured as a form of personal transportation for movement of user from one location to another location.

According to various embodiments, an electric personal mobility device sharing system may include a system setup for sharing the use of electric personal mobility device. For example, electric scooter sharing, powered scooter sharing, electric kick scooter sharing, or powered kick scooter sharing. According to various embodiments, the sharing system may include a plurality of electric personal mobility device deployed in multiple locations for registered riders to easily rent it onsite via network application (e.g. mobile application, etc.) so as to use the personal mobility device as a mode of transportation.

Various embodiments may provide a hardware solution to solve the charging challenges of electric personal mobility devices for a sharing service in an efficient and effective manner. According to various embodiments, the hardware solution may include implementing swappable battery in electric personal mobility device. Various embodiments may be implemented at scale such that sharing services operators may be able to resolve the charging challenges associated with electric personal mobility devices. According to various embodiments, an electric personal mobility device may include a dual battery cell, swappable in the field (not just removable), in a secure chamber that prevents theft and environment elements.

According to various embodiments, the electric personal mobility device may be configured with battery safety. Battery safety is generally an industry wide issue from smartphones to e-scooter sharing operators.

According to various embodiments, the electric personal mobility device may be configured with ease of operations. According to various embodiments, one of the factors affecting the success of the battery swapping feature is how long it takes for operations team to swap the battery in the field. Currently, personal mobility devices with removable batteries are available. However, there is a huge difference between swappable battery and removable battery. Removable battery means the battery pack can be removed in specific conditions with certain efforts. Swappable, however, means operations worker may go into the field and easily take the batteries out of a secure and locked chamber and swap in another charged battery pack, all in a limited timeline when their truck is waiting by the road. For example, a battery swapping time may be between 2-3 minutes. According to various embodiment, being swappable means 'quick change' or 'quick replace', without requiring cable disconnecting, without requiring of folding/unfolding of main body, without requiring taking out screws or nuts, without requiring lifting up or side tilting of scooter body, without requiring electric operation using electric power. According to various embodiments, the electric personal mobility device may be configured for quick and easy on-site swapping of battery/batteries.

According to various embodiments, the electric personal mobility device may be configured with battery security. Battery security is also an important factor because if the operations team can easily swap the battery in the field, the battery may also be vulnerable to theft and sabotage. According to various embodiments, the electric personal mobility device may be configured with a secured chamber to ensure the security of the battery packs.

According to various embodiments, the battery of the electric personal mobility device may be configured to have high Ingress Protection rating (IP rating). Each time a battery is swapped and taken externally, there may be an increasing waterproofing risk. According to various embodiments, the battery of the electric personal mobility device may be configured to have a minimum IP rating level of IP67 so as to be weather proof and yet being swappable.

According to various embodiments, the electric personal mobility device may be configured with structural integrity. Swappable battery may increase the risk of structural damage of hardware due to vulnerability during swapping of batteries, which in turn may affect durability and lifespan of the electric personal mobility device. According to various embodiments, the electric personal mobility device and batteries may be configured to have a lifespan of 12 months or more.

According to various embodiments, the electric personal mobility device may be configured to have a suitable balance between battery capacity and size. The electric personal mobility device may be configured to have battery pack which is small and light in order to be transported easily while maintaining the minimum IP rating level and capacity to allow adequate usage duration.

According to various embodiments, the electric personal mobility device may be configured to provide an endurance of 45km or more (under experimental conditions), or preferably 50 km or more (under experimental conditions). According to various embodiments, the electric personal mobility device may be configured to have a charging time of less than 7 hours (from complete discharge status to full charge status), or preferably less than 4 hours (from complete discharge status to full charge status). According to various embodiments, the electric personal mobility device may allow a reduction of operation cost of 50% for workers to carry out swapping of batteries in the field as compared to the current operations of picking up electric personal mobility device on the streets for charging and redeploying the electric personal mobility device after charging.

According to various embodiments, the battery of the electric personal mobility device may be configured to be swappable. According to various embodiments, the battery and the electric personal mobility device may be configured to be free of dead connection therebetween. According to various embodiments, the battery of the electric personal mobility device may be configured to be easily taken out of the electric personal mobility device.

According to various embodiments, the main body of the electric personal mobility device, in particular the part of the body that supports the rider or the user (or the rider-support-platform structure), may be configured to be such that the weight of the rider or the user may be sufficiently supported while the battery may be easily swapped. According to various embodiments, the part of the body of the electric personal mobility device that supports the rider or the user (or the rider-support-platform structure) may be configured to house two batteries along its two sides in a manners such that it may still have a solid structure to support the weight of the rider or the user. According to various embodiments, the electric personal mobility device may be configured to have a dual swappable battery configuration.

According to various embodiments, the battery of the electric personal mobility device may be configured to provide an output of 36V with 6.4Ah. According to various embodiments, the battery of the electric personal mobility device may include 20 cells packed into a single battery pack. According to various embodiments, the battery of the electric personal mobility device may include a ring configured to make it easy to pull out the battery from the electric personal mobility device. According to various embodiments, the battery of the electric personal mobility device may include an indicator configured for providing visual feedback on the battery level. According to various embodiments, the battery of the electric personal mobility device may be configured to have an IP rating of IP67 level.

According to various embodiments, the electric personal mobility device may be configured to allow quick and easy swap of batteries. According to various embodiments, the electric personal mobility device may be configured such that battery/batteries may be easily replaced when the electric personal mobility device is in the parking status, without requiring disassembling and/or reassembling of the electric personal mobility device. According to various embodiments, the electric personal mobility device may be configured to allow swapping of battery/batteries within 1 to 3 minutes, or 2 to 3 minutes, or 1 to 2 minutes. According to various embodiments, the electric personal mobility device may be configured to require less effort to swap the battery/batteries. According to various embodiments, the electric personal mobility device may be configured to allow swapping of battery without requiring extra tools, e.g. screw drivers or electric screw driver etc. According to various embodiments, the electric personal mobility device may be configured to open and lock for swapping of battery with a special key.

According to various embodiments, the electric personal mobility device may be configured such that there is no need to lay down the electric personal mobility device or to fold the electric personal mobility device to perform swapping of battery. Accordingly, the operation worker may require less effort and less time to perform swapping of battery with minimum impact to the ongoing traffic in the field as compared to if the operation worker is required to lay down the electric personal mobility device and/or to fold the electric personal mobility device.

According to various embodiments, the electric personal mobility device may be configured to have high IP rating level. According to various embodiments, the power connector and communication interface of the electric personal mobility device may be configured to be reliable and mature in a sharing system scenario. According to various embodiments, the electric personal mobility device may be configured such that the waterproof and dust-proof performance is at least IP67 level.

According to various embodiments, a structure of the battery may be configured to allow safe, fast and low-cost swapping in the electric personal mobility device. According to various embodiments, the battery may be configured to be replaced by pull and insert method. In order to prevent friction and jamming between batteries and the wall of batteries, and even short circuit caused by metal foreign bodies, sliding sleeves (or lubricating member) may be installed at both ends of batteries to separate batteries from the wall of batteries. The sliding sleeves (or the lubricating member) may be made of self-lubricating and insulating materials, which may not introduce metal foreign bodies to contact with the wall of batteries and may slide smoothly, so that the batteries may be replaced safely and conveniently.

According to various embodiments, the sliding sleeves (or the lubricating member) may be configured to be durable so as to provide durable performance for frequent removal and insertion of the battery by the operations worker. According to various embodiments, the sliding sleeves (or the lubricating member) may be configured to be easily replaceable so as to allow easy maintenance from frequent usage and wear and tear.

According to various embodiments, the sliding sleeves (or the lubricating member) may be wrapped at both ends of the battery, which may reduce the direct contact between the battery and external obj ects. It may protect the battery and improve the reliability of the battery.

According to various embodiments, the sliding sleeves (or the lubricating member) and the battery may be configured to be modular and have a universal configuration. Firstly, the sliding sleeves (or the lubricating member) may be disassembled and replaced separately after being damaged, and the whole battery need not be replaced. Secondly, the sliding sleeves (or the lubricating member) at the left and right ends of the battery may be interchanged to reduce the operation and maintenance costs for the same size parts.

According to various embodiments, the electric personal mobility device may include a lock system (or a locking mechanism) for the dual swappable battery. According to various embodiments, the lock system (or the locking mechanism) may include a special lock system configured to ensure that the battery is not stolen or unauthorized removal. According to various embodiments, the lock system (or the locking mechanism) may be configured to lock the two batteries to the main body of the electric personal mobility device, in particular the part of the body that supports the rider or the user (or the rider-support-platform structure). According to various embodiments, the lock system (or the locking mechanism) may be embedded in a rear-wheel-fork to lock the batteries doors (or cover portions). According to various embodiments, for high swapping efficiency, the lock system (or the locking mechanism) may be configured to support one open action to unlock two batteries doors at the same time, and also support one close action to close the two batteries doors. According to various embodiments, the two batteries doors may be integrated into one single cover. According to various embodiments, the lock system (or the locking mechanism) may be configured to auto locked upon closing the batteries doors. According to various embodiments, the lock system (or the locking mechanism) may be configured to only grant access to authorized operations worker with a special configured key that may not easily be copied.

According to various embodiments, the electric personal mobility device may include a single cover (with two batteries doors or cover portions) and a single lock system (or a single locking mechanism). According to various embodiments, operations workers may be able to lift the single rear guard (or the single rear cover) for dual battery swapping. According to various embodiments, the single lock system (or the single locking mechanism) may be configured for auto locking such that once the rear guard (or the single rear cover) is closed there may be no additional need to lock further, which may makes field operations more efficient.

According to various embodiments, the lock system (or the locking mechanism) may include a mechanical lock. According to various embodiments, the lock system (or the locking mechanism) may include a lockset integrated in the rear guard (or the battery hatch or the rear cover). According to various embodiments, the lockset may include a lock tongue (or a locking pin) biased in a manner so as to pop out in a direction of the rear wheel fork for locking the rear guard (or the rear cover) to the rear wheel fork. According to various embodiments, the lock tongue (or the locking pin) may be configured to match or correspond with a recessed hole in the rear wheel fork. According to various embodiments, the lock tongue (or the locking pin) may be configured to be inserted into the recessed hole of the rear wheel fork in a manner so as to secure the battery hatch cover (or the rear cover) for locking the battery hatch cover (or the rear cover).

According to various embodiments, the battery may be configured to include a pull ring. According to various embodiments, the pull ring may be a mechanical structure which may allow the battery to be taken out easily from the battery compartment of the electric personal mobility device by using fingers instead of requiring tools. According to various embodiments, the pull ring may be fixed on an end face of the battery in a permanent manner so as to be non-separable from the battery at all times. According to various embodiments, the pull ring may be configured to be pivotable with respect to the end face such that the pull ring may be pivoted between a folded orientation wherein the pull ring is parallel to the end face of the battery and a deployed orientation wherein the pull ring is perpendicular to the end face of the battery which may allow a finger to be inserted into the pull ring for pulling the battery. According to various embodiments, the pull ring may be configured to be pivoted about a pivoting axis which is tangent to a point along a circumference of the pull ring. According to various embodiments, the pull ring may be configured to pivot with a range of angle from 0° to 180° about the pivoting axis.

According to various embodiments, the part of the body of the electric personal mobility device that supports the rider or the user (or the rider-support-platform structure) may be configured to meet the support function and also be configured to store the dual battery. According to various embodiments, the rider-support-platform structure may be divided into three cavities (or compartments) in the width direction, and the middle cavity (or the middle axial compartment) may be used for wiring, fixing the kickstand and fixing the controller. According to various embodiments, the two sides of the rider-support-platform structure may be battery bunkers (or battery compartments). According to various embodiments, the cross section of the battery compartments may of a shape corresponding to the shape of the battery but leaving a predetermined gap to ensure that the battery may be inserted in and taken out smoothly. According to various embodiments, the rider-support-platform structure may include small holes which may reduce the weight without compromising strength. According to various embodiments, the rider-support-platform structure may include two ribs at the bottom, which may improve the strength and also protect the battery storage from damage when the electric personal mobility device is used on the road.

According to various embodiments, there may be provided a swappable battery charging station. The swappable battery charging station may be in the form of a standalone charging rack configured to charge multiple swappable batteries at the same time. According to various embodiments, the swappable battery charging station may be configured to support multiple batteries to charge at the same time. According to various embodiments, the swappable battery charging station may be configured for ease to use and small size. According to various embodiments, swappable battery charging station may be configured to support fast charging. According to various embodiments, the swappable battery charging station may be configured to have changeable connector so as to support multiple types of batteries.

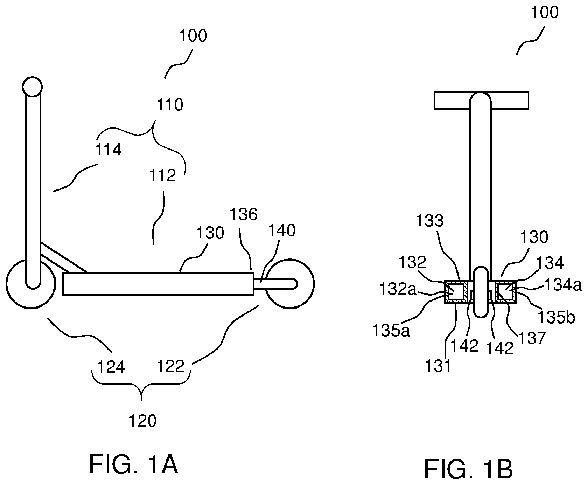

FIG. 1A and FIG. 1B show schematic diagrams (side view and rear view) of an electric personal mobility device 100 according to various embodiments. According to various embodiments, the electric personal mobility device 100 includes a main body 110 including a rider-support-platform structure 112 and a steering column 114 coupled to the rider-support-platform structure 112. According to various embodiments, the rider-support-platform structure 112 may be configured to support a rider directly standing on top of the rider-support-platform structure 112. For example, the rider-support-platform structure 112 may be a deck of an electric kick scooter configured for a rider to stand on. According to various embodiments, the rider-support-platform structure 112 may be configured to support a rider via a seat structure on the rider-support-platform structure 112 which the rider may be seated on. According to various embodiments, the rider-support-platform structure 112 may be aligned horizontally with respect to a ground. According to various embodiments, the steering column 114 may be extending in an upward directions with respect to the rider-support-platform structure 112. According to various embodiments, the steering column 114 may be substantially vertical or upright with respect to the rider-support-platform structure 112. According to various embodiments, the steering column 114 may be configured for the rider to steer a direction of movement of the electric personal mobility device 100. According to various embodiments, the steering column 114 may be pivotably coupled to the rider-support-platform structure 112. According to various embodiments, the steering column 114 may include a handle which the rider may hold onto.

According to various embodiments, the electric personal mobility device 100 includes a wheel arrangement 120 supporting the main body 110. The wheel arrangement 120 includes at least one front wheel 124 and at least one rear wheel 122. According to various embodiments, the wheel arrangement 120 may be supporting the main body 110 in a manner such that the main body 110 is elevated above the ground. Accordingly, only the at least one front wheel 124 and the at least one rear wheel 122 may be in contact with the ground. Hence, the electric personal mobility device 100 may be moved with respect to the ground via the rotation or turning of the at least one front wheel 124 and the at least one rear wheel 122. According to various embodiments, the at least one front wheel 124 is configured to be steerable by the steering column 114. According to various embodiments, the at least one front wheel 124 may be coupled to the steering column 114. According to various embodiments, the steering column 114 may include a front wheel fork which holds the at least one front wheel 124.

According to various embodiments, the rider-support-platform 112 includes an elongate hollow housing structure 130. According to various embodiments, the elongate hollow housing structure 130 may be of any suitable elongate shape. According to various embodiments, the elongate hollow housing structure 130 encloses an internal space.
According to various embodiments, the elongate hollow housing structure 130 may include a floor panel portion 131, a ceiling panel portion 133, and sidewall portions 135a, 135b extending between the floor panel portion 131 and the ceiling panel portion 133 to define the internal space. According to various embodiments, the floor panel portion 131 may be of an elongate shape and the ceiling panel portion 133 may also be of an elongate shape. Accordingly, the sidewall portions 135a, 135b may be longitudinal sidewall portions 135a, 135b extending from respective longitudinal edges of the floor panel portion 131 to corresponding longitudinal edges of the ceiling panel portion 133.

According to various embodiments, the internal space is partitioned to define a first longitudinal-internal-battery-compartment 132 and a second longitudinal-internal-battery-compartment 134. According to various embodiments, the elongate hollow housing structure 130 may include one or more partitioning walls 137 to partition the internal space into two or more compartments. According to various embodiments, the one or more partitioning walls 137 may partition the internal space into the two or more compartments which include the first longitudinal-internal-battery-compartment 132 and the second longitudinal-internal-battery-compartment 134.

According to various embodiments, each longitudinal-internal-battery-compartment 132, 134 extends lengthwise along respective longitudinal side of the elongate hollow housing structure 130. Hence, the first longitudinal-internal-battery-compartment 132 and the second longitudinal-internal-battery-compartment 134 may be running internally along respective longitudinal sides of the elongate hollow housing structure 130.

According to various embodiments, each longitudinal-internal-battery-compartment 132, 134 has the respective rear opening 132a, 134a at the aft portion 136 of the elongate hollow housing structure 130. According to various embodiments, the aft portion 136 of the elongate hollow housing structure 130 may be an end of the hollow housing structure 130 directed away from the steering column 114. According to various embodiments, the aft portion 136 of the elongate hollow housing structure 130 may include an end surface perpendicular to a longitudinal axis of the elongate hollow housing structure 130. According to various embodiments, the first and second rear openings 132a, 134a may be apertures on the end surface of the elongate hollow housing structure 130.

According to various embodiments, the rider-support-platform structure 112 includes a rear-wheel-fork 140. The rear-wheel-fork 140 is fixedly extending longitudinally from the aft portion 136 of the elongate hollow housing structure 130 between the rear openings 132a, 134a of the first and second longitudinal-internal-battery-compartments 132, 134. Accordingly, a base of the rear-wheel-fork 140 may be located between the rear openings 132a, 134a of the first and second longitudinal-internal-battery-compartments 132, 134 and fixedly joined to the aft portion 136 of the elongate hollow housing structure 130 in a manner such that the rear-wheel-fork 140 may be extending longitudinally from the aft portion 136 of the elongate hollow housing structure 130. According to various embodiments, the rear-wheel-fork 140 holds the at least one rear wheel 122.
According to various embodiments, the rear-wheel-fork 140 may include two prongs 142 extending longitudinally and configured to hold the at least one rear wheel 122.

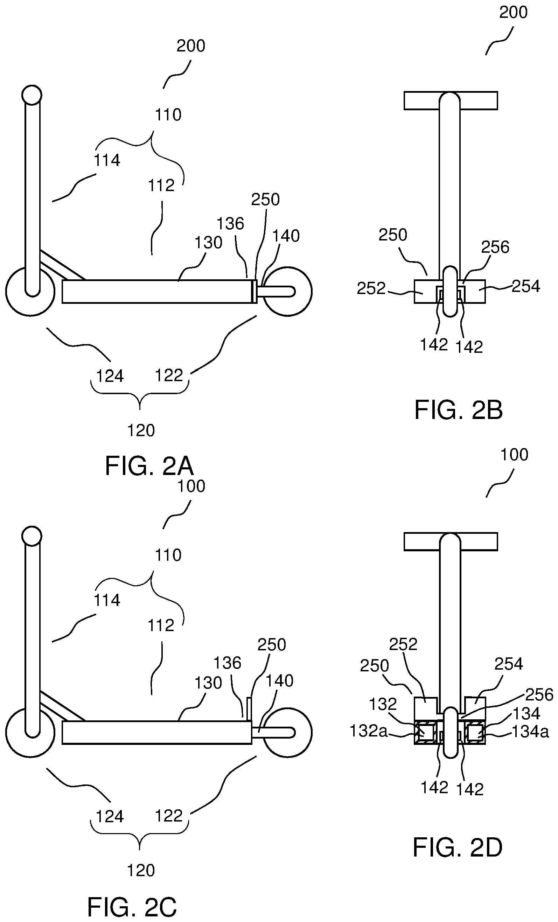

FIG. 2A, FIG. 2B, FIG. 2C and FIG. 2D show schematic diagrams (side views and rear views) of an electric personal mobility device 200 according to various embodiments. According to various embodiments, the electric personal mobility device 200 of FIG. 2A to FIG. 2D may contain all the features of the electric personal mobility device 100 of FIG. 1A and FIG. 1B. Accordingly, all features, changes, modifications, and variations that are applicable to the electric personal mobility device 100 of FIG. 1A and FIG. 1B may also be applicable to the electric personal mobility device 200 of FIG. 2A to FIG. 2D. According to various embodiments, the electric personal mobility device 200 of FIG. 2A to FIG. 2D may differ from the electric personal mobility device 100 of FIG. 1A and FIG. 1B in that the electric personal mobility device 200 of FIG. 2A to FIG. 2D may include the following additional features and/or limitations.

As shown, according to various embodiments, the rider-support-platform structure 112 of the electric personal mobility device 200 of FIG. 2A to FIG. 2D includes a single-rear-cover 250 openable and closeable relative to the rear openings 132a, 134a of the first and second longitudinal-internal-battery-compartments 132, 134. FIG. 2A and FIG. 2B show the single-rear-cover 250 in a closed disposition and FIG. 2C and FIG. 2D show the single-rear-cover 250 in an opened disposition. As shown, according to various embodiments, the single-rear-cover 250 may be pivotably coupled to the elongate hollow housing structure 130 such that the single-rear-cover 250 may be pivotable to open and close the rear openings 132a, 134a of the first and second longitudinal-internal-battery-compartments 132, 134. According to various embodiments (not shown), the single-rear-cover 250 may be removably coupled to the elongate hollow housing structure 130 such that the single-rear-cover 250 may be removed to open the rear openings 132a, 134a of the first and second longitudinal-internal-battery-compartments 132, 134 and may be coupled to close the rear openings 132a, 134a of the first and second longitudinal-internal-battery-compartments 132, 134.

According to various embodiments, the single-rear-cover 250 includes the first and second closure portions 252, 254 corresponding to the respective rear openings 132a, 134a of the first and second longitudinal-internal-battery-compartments 132, 134 so as to simultaneously engage with the respective rear openings 132a, 134a to conceal the respective rear openings 132a, 134a when the single-rear-cover 250 is closed and to simultaneously disengage from the respective rear openings 132a, 134a to expose the respective rear openings 132a, 134a when the single-rear-cover 250 is opened.

According to various embodiments, the single-rear-cover 250 may include a linking portion 256 which extends between the first closure portion 252 and the second closure portion 254 so as to integrally join the first closure portion 252 and the second closure portion 254 such that the first closure portion 252, the second closure portion 254 and the linking portion 256 form a single unit as a whole. According to various embodiments, when the single-rear-cover 250 is in the closed disposition, the first closure portion 252 may be on a first side of the rear-wheel-fork 140, the second closure portion 254 may be on a second opposite side of the rear-wheel-fork 140, and the linking portion 256 may be extending over and across the rear-wheel-fork 140 such that the single-rear-cover 250 may be a one-piece cover covering both the first and second rear openings 132a, 134a of the first and second longitudinal-internal-battery-compartments 132, 134.

According to various embodiments, the rider-support-platform 112 may further include a locking mechanism (not shown) configured to releasably lock the single-rear-cover 250 when the single-rear-cover 250 is closed. According to various embodiments, the locking mechanism may include a lockset having a retractably extendable locking pin located on the single-rear-cover 250. According to various embodiments, the locking mechanism may include corresponding pin hole located in the rear-wheel-fork 140. Accordingly, when the single-rear-cover 250 is closed, the lockset with the locking pin on the single-rear-cover 250 may be brought into engagement with the pin hole on the rear-wheel-fork 140 such that the locking pin may be extended so as to be inserted into the pin hole to lock the single-rear-cover 250 to the rear-wheel-fork 140. According to various embodiments, the single-rear-cover 250 may include one locking mechanism for locking the single-rear-cover 250.

According to various embodiments, the single-rear-cover 250 may include a wheel-fork-engagement-face portion (not shown) which abuts the rear-wheel-fork 140 when the single-rear-cover 250 is closed and which is displaced apart from the rear-wheel-fork 140 when the single-rear-cover 250 is opened. Accordingly, the locking mechanism may be configured to releasably lock the single-rear-cover 250 to the rear-wheel-fork 140 via the abutment of the wheel-fork-engagement-face portion with the rear-wheel-fork 140 when the single rear cover 250 is closed. According to various embodiments, the lockset with the locking pin may be located on the single-rear-cover 250 in a manner such that the locking pin may be perpendicular to the wheel-fork-engagement-face so as to be extendable for inserting into and retractable for withdrawing from the pin hole in the rear-wheel-fork 140.

According to various embodiments, the locking mechanism may be configured to be auto-locking. According to various embodiments, the locking pin of the lockset may be biased or spring biased to favour a locking position of the locking pin. According to various embodiments, a locking tip of the locking pin may be configured in a manner such that, when the single-rear-cover 250 is closing, the closing action may cause the locking pin to retract such that the single-rear-cover 250 may be moved from the opened disposition into the closed disposition. Once the single-rear-cover 250 is in the closed disposition, the locking pin may be biased outward so as to be extended for inserting into the pin hole automatically to lock the single-rear-cover 250 in place. According to various embodiments, to unlock the single-rear-cover 250, the locking mechanism may be manually operated, for example via a key, to retract the locking pin such that the single-rear-cover 250 may be moved from the closed disposition into the opened disposition.

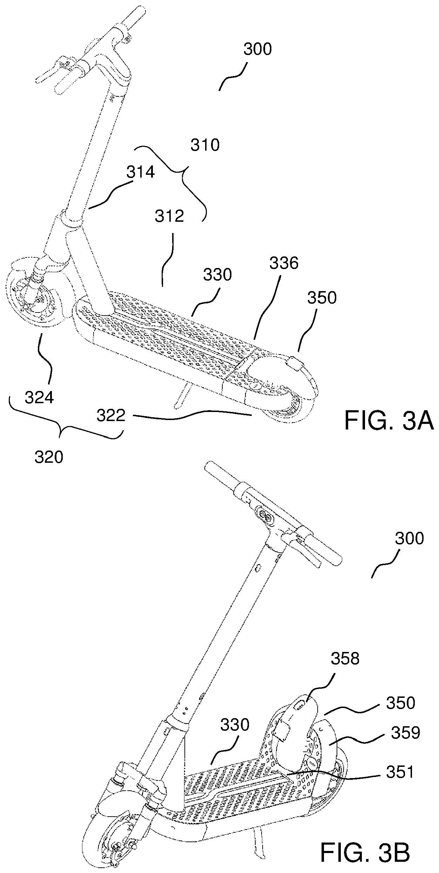

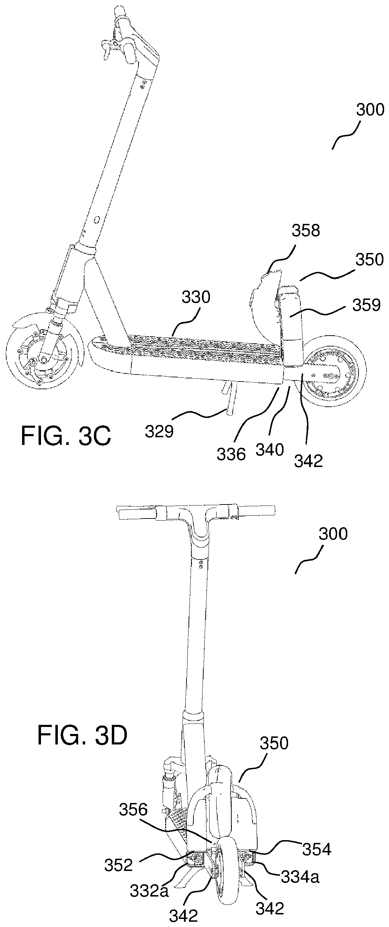

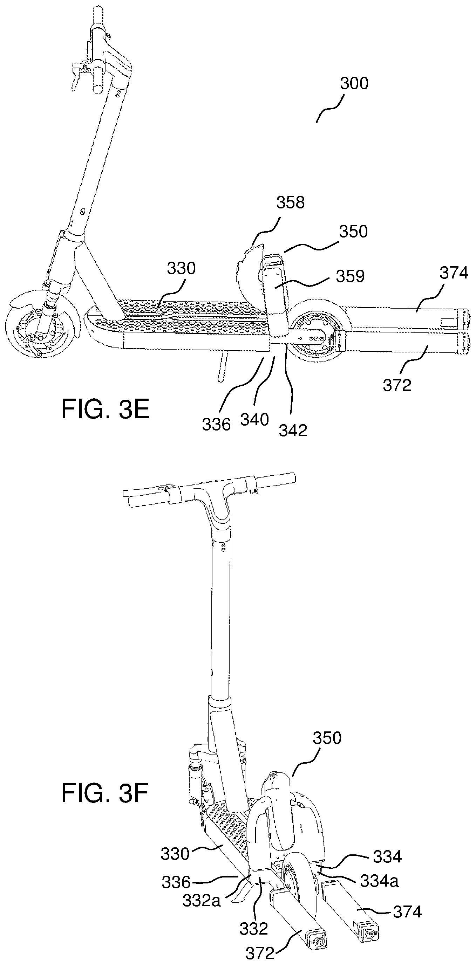

FIG. 3A, FIG. 3B, FIG. 3C, FIG. 3D, FIG. 3E and FIG. 3F show various views of an electric personal mobility device 300 according to various embodiments. According to various embodiments, the electric personal mobility device 300 of FIG. 3A to FIG. 3F may contain all the features of the electric personal mobility device 100 of FIG. 1A and FIG. 1B and/or the electric personal mobility device 200 of FIG. 2A to FIG. 2D. Accordingly, all features, changes, modifications, and variations that are applicable to the electric personal mobility device 100 of FIG. 1A and FIG. 1B and/or the electric personal mobility device 200 of FIG. 2A to FIG. 2D may also be applicable to the electric personal mobility device 300 of FIG. 3A to FIG. 3F.

According to various embodiments, the electric personal mobility device 3 includes a main body 310 including a rider-support-platform structure 312 and a steering column 314 coupled to the rider-support-platform structure 312. According to various embodiments, the rider-support-platform structure 312 may be configured to support a rider directly standing on top of the rider-support-platform structure 312. For example as shown, the electric personal mobility device 300 may be an electric kick scooter and the rider-support-platform structure 312 may be a deck of the electric kick scooter configured for a rider to stand on. According to various embodiments, the rider-support-platform structure 312 may be aligned horizontally with respect to a ground. According to various embodiments, the steering column 314 may be extending in an upward directions with respect to the rider-support-platform structure 312. According to various embodiments, the steering column 314 may be substantially vertical or upright with respect to the rider-support-platform structure 312. According to various embodiments, the steering column 314 may be configured for the rider to steer a direction of movement of the electric personal mobility device 300. According to various embodiments, the steering column 314 may be pivotably coupled to the rider-support- platform structure 312. According to various embodiments, the steering column 314 may include a handle which the rider may hold onto.

According to various embodiments, the electric personal mobility device 300 includes a wheel arrangement 320 supporting the main body 310. The wheel arrangement 320 includes at least one front wheel 324 and at least one rear wheel 322. According to various embodiments, the wheel arrangement 320 may be supporting the main body 310 in a manner such that the main body 310 is elevated above the ground. Accordingly, the at least one front wheel 324 and the at least one rear wheel 322 may be in contact with the ground. Hence, the electric personal mobility device 300 may be moved with respect to the ground via the rotation or turning of the at least one front wheel 324 and the at least one rear wheel 322. According to various embodiments, the at least one front wheel 324 is configured to be steerable by the steering column 314. According to various embodiments, the at least one front wheel 324 may be coupled to the steering column 314. According to various embodiments, the steering column 314 may include a front wheel fork which holds the at least one front wheel 324.

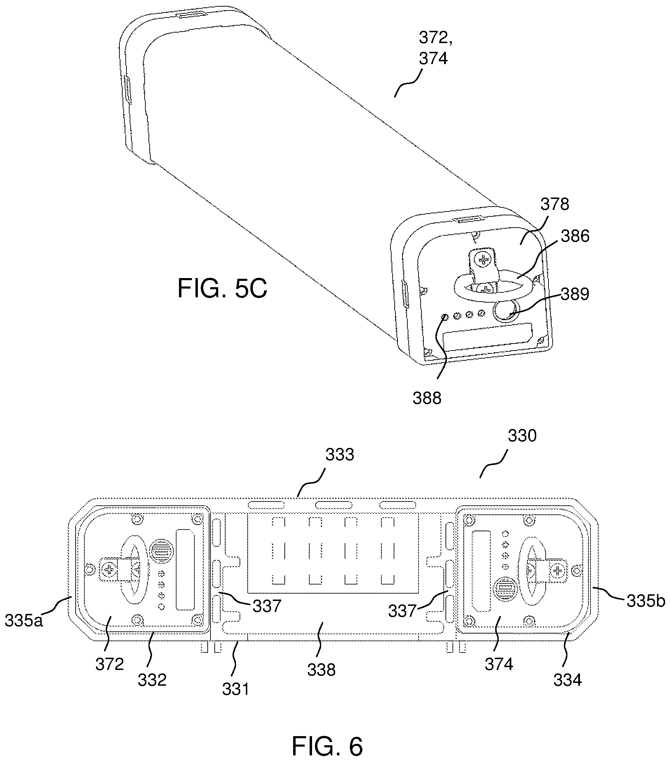

According to various embodiments, the rider-support-platform 312 includes an elongate hollow housing structure 330. According to various embodiments, the elongate hollow housing structure 330 may be of any suitable elongate shape. According to various embodiments, the elongate hollow housing structure 330 encloses an internal space.
According to various embodiments, referring to FIG. 6 which shows a cross-section of the elongate hollow housing structure 330, the elongate hollow housing structure 330 may include a floor panel portion 331, a ceiling panel portion 333, and sidewall portions 335a, 335b extending between the floor panel portion 331 and the ceiling panel portion 333 to define the internal space. According to various embodiments, the floor panel portion 331 may be of an elongate shape and the ceiling panel portion 333 may also be of an elongate shape. Accordingly, the sidewall portions 335a, 335b may be longitudinal sidewall portions 335a, 335b extending from respective longitudinal edges of the floor panel portion 331 to corresponding longitudinal edges of the ceiling panel portion 333.

According to various embodiments, the internal space is partitioned to define a first longitudinal-internal-battery-compartment 332 and a second longitudinal-internal-battery-compartment 334. According to various embodiments, the elongate hollow housing structure 330 may include one or more partitioning walls 337 to partition the internal space into two or more compartments. According to various embodiments, the one or more partitioning walls 337 may partition the internal space into the two or more compartments which include the first longitudinal-internal-battery-compartment 332 and the second longitudinal-internal-battery-compartment 334.

According to various embodiments, each longitudinal-internal-battery-compartment 332, 334 extends lengthwise along respective longitudinal side of the elongate hollow housing structure 330. Hence, the first longitudinal-internal-battery-compartment 332 and the second longitudinal-internal-battery-compartment 334 may be running internally along respective longitudinal sides of the elongate hollow housing structure 330.

According to various embodiments, referring to FIG. 3D and FIG. 3F, each longitudinal-internal-battery-compartment 332, 334 has the respective rear opening 332a, 334a at the aft portion 336 of the elongate hollow housing structure 330. According to various embodiments, the aft portion 336 of the elongate hollow housing structure 330 may be an end of the hollow housing structure 330 directed away from the steering column 314. According to various embodiments, the aft portion 336 of the elongate hollow housing structure 330 may include an end surface perpendicular to a longitudinal axis of the elongate hollow housing structure 330. According to various embodiments, the first and second rear openings 332a, 334a may be apertures on the end surface of the elongate hollow housing structure 330.

According to various embodiments, the rider-support-platform structure 312 includes a rear-wheel-fork 340. The rear-wheel-fork 340 is fixedly extending longitudinally from the aft portion 336 of the elongate hollow housing structure 330 between the rear openings 332a, 334a of the first and second longitudinal-internal-battery-compartments 332, 334. Accordingly, a base of the rear-wheel-fork 340 may be located between the rear openings 332a, 334a of the first and second longitudinal-internal-battery-compartments 332, 334 and fixedly joined to the aft portion 336 of the elongate hollow housing structure 330 in a manner such that the rear-wheel-fork 340 may be extending longitudinally from the aft portion 336 of the elongate hollow housing structure 330. According to various embodiments, the rear-wheel-fork 340 holds the at least one rear wheel 322.
According to various embodiments, the rear-wheel-fork 340 may include two prongs 342 extending longitudinally and configured to hold the at least one rear wheel 322.

According to various embodiments, the rider-support-platform structure 312 of the electric personal mobility device 300 includes a single-rear-cover 350 openable and closeable relative to the rear openings 332a, 334a of the first and second longitudinal-internal-battery-compartments 332, 334. FIG. 3A show the single-rear-cover 350 in a closed disposition and FIG. 3B to FIG. 3D show the single-rear-cover 350 in an opened disposition. As shown, according to various embodiments, the single-rear-cover 350 may be pivotably coupled to the elongate hollow housing structure 330 such that the single-rear-cover 350 may be pivotable to open and close the rear openings 332a, 334a of the first and second longitudinal-internal-battery-compartments 332, 334. According to various embodiments, a hinge 351 may be provided between the elongate hollow housing structure 330 and the single-rear-cover 350 such that the single-rear-cover 350 may be pivotable relative to the elongate hollow housing structure 330. According to various embodiments, the hinge 351 may connect an edge of the ceiling panel portion 333 of the elongate hollow housing structure 330 to a top edge of the single-rear-cover 350. Accordingly, the single-rear-cover 350 may be pivotable towards an exterior surface of the ceiling panel portion 333 of the elongate hollow housing structure 330.

According to various embodiments, the single-rear-cover 350 includes first and second closure portions 352, 354 corresponding to the respective rear openings 332a, 334a of the first and second longitudinal-internal-battery-compartments 332, 334 so as to simultaneously engage with the respective rear openings 332a, 334a to conceal the respective rear openings 332a, 334a when the single-rear-cover 350 is closed and to simultaneously disengage from the respective rear openings 332a, 334a to expose the respective rear openings 332a, 334a when the single-rear-cover 350 is opened.

According to various embodiments, the single-rear-cover 350 may include a linking portion 356 which extends between the first closure portion 352 and the second closure portion 354 so as to integrally join the first closure portion 352 and the second closure portion 354 such that the first closure portion 352, the second closure portion 354 and the linking portion 356 form a single unit as a whole. According to various embodiments, when the single-rear-cover 350 is in the closed disposition, the first closure portion 352 may be on a first side of the rear-wheel-fork 340, the second closure portion 354 may be on a second opposite side of the rear-wheel-fork 340, and the linking portion 356 may be extending over and across the rear-wheel-fork 340 such that the single-rear-cover 350 may be a one-piece cover simultaneously covering both the first and second rear openings 332a, 334a of the first and second longitudinal-internal-battery-compartments 332, 334.

According to various embodiments, the single-rear-cover 350 may include a rear-wheel-fender 358. According to various embodiments, the rear-wheel-fender 358 may be extending from the linking portion 356 of the single-rear-cover 350 in a manner such that the rear-wheel-fender 358 may be suspended over the at least one rear wheel 322 when the single-rear-cover 350 is closed. According to various embodiments, the rear-wheel-fender 358 may also be the linking portion 356 joining the first closure portion 352 and the second closure portion 354 in a manner so as to be suspended over the at least one rear wheel 322 when the single-rear-cover 350 is closed.

According to various embodiments, the single-rear-cover 350 may include a pair of wheel-fork-guards 359. According to various embodiments, the pair of wheel-fork-guards 359 may be extending from the respective first and second closure portions 352, 354 in a manner such that the pair of wheel-fork-guards 359 may be abutting the respective sides of the rear-wheel-fork 340 when the single-rear-cover 350 is closed. Accordingly, the pair of wheel-fork-guards 359 may be in a spaced apart configuration such that the at least one rear wheel 322 with the rear-wheel-fork 340 may be fitted into a space between the pair of wheel-fork-guards 359 when the single-rear-cover 350 is closed. According to various embodiments, when the single-rear-cover 350 is closed, the pair of wheel-fork-guards 359 may be extending in a longitudinal direction of the elongate hollow housing structure 330 so as to be parallel to and coincide with the respective sides of the rear-wheel-fork 340. According to various embodiments, the rear-wheel-fender 358 may be suspended across the pair of wheel-fork-guards 359. Accordingly, the rear-wheel-fender 358 may connect the pair of wheel-fork-guards 359.

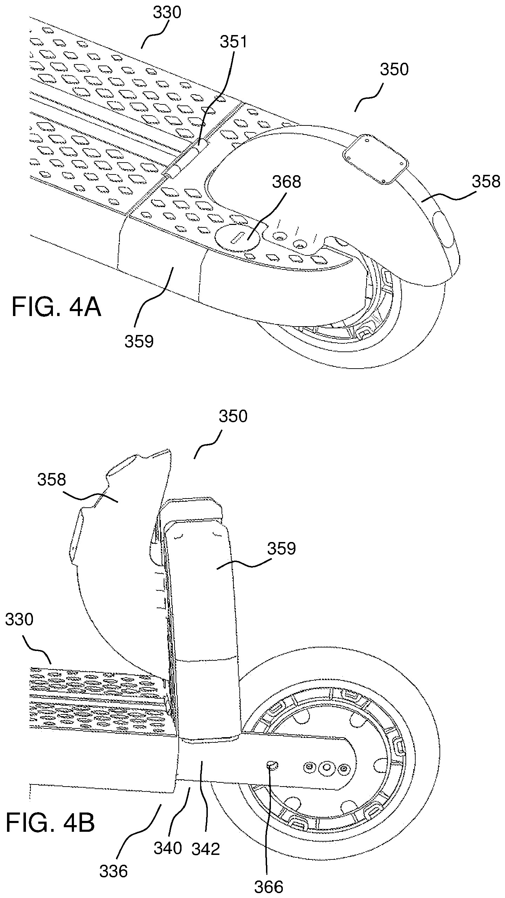

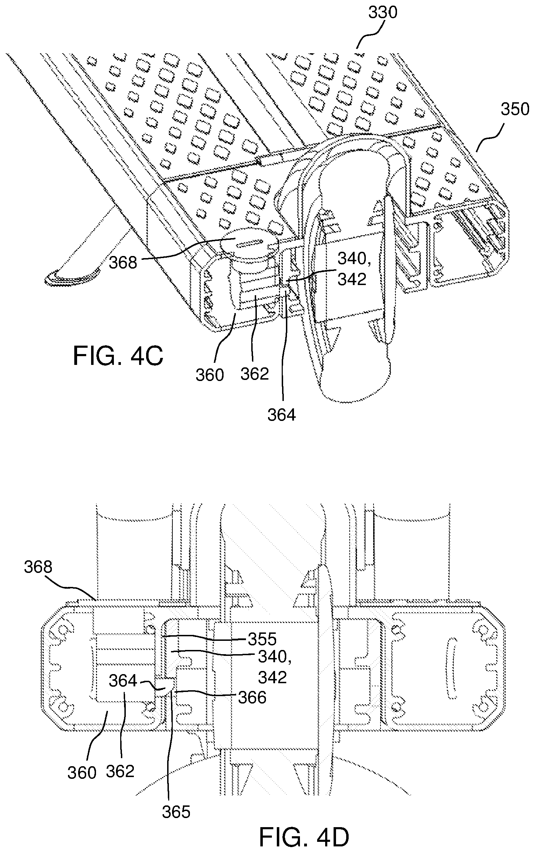

FIG. 4A and FIG. 4B show close up view of a rear of the rider-support-platform structure 312 according to various embodiments. FIG. 4C and FIG. 4D show cut out views of the rear of the rider-support-platform structure 312 according to various embodiments. According to various embodiments, the rider-support-platform 312 may further include a locking mechanism 360 configured to releasably lock the single-rear-cover 350 when the single-rear-cover 350 is closed. According to various embodiments, the locking mechanism 360 may include a lockset 362 having a retractably extendable locking pin 364 located on the single-rear-cover 350. According to various embodiments, the locking mechanism 360 may include corresponding pin hole 366 located in the rear-wheel-fork 340. Accordingly, when the single-rear-cover 350 is closed, the lockset 362 with the locking pin 364 on the single-rear-cover 350 may be brought into engagement with the pin hole 366 on the rear-wheel-fork 340 such that the locking pin 364 may be extended so as to be inserted into the pin hole 366 to lock the single-rear-cover 350 to the rear-wheel-fork 340. According to various embodiments, the lockset 362 may include a keyhole 368 exposed on an exterior surface of the single-rear-cover 350 such that a key may be inserted to unlock the locking mechanism 360.

According to various embodiments, the lockset 362 may be located in one of the pair of wheel-fork-guards 359. Accordingly, the keyhole 368 of the lockset 362 may be exposed on an exterior surface of the one of the pair of wheel-fork-guards 359 of the single-rear-cover 350. According to various embodiments, the locking pin 364 of the lockset 362 may be configured to be retractably extendable with respect to the one of the pair of wheel-fork-guards 359 of the single-rear-cover 350. Hence, when the single-rear-cover 350 is closed, the locking pin 364 of the lockset 362 may be extended from the one of the pair of wheel-fork-guards 359 so as to be inserted into the pin hole in the rear-wheel-fork 140. To unlock the single-rear-cover 350, the locking pin 364 may be retracted into the one of the pair of wheel-fork-guards 359.

According to various embodiments, the single-rear-cover 350 may include one locking mechanism 360 for locking the single-rear-cover 350.

According to various embodiments, the single-rear-cover 350 may include a wheel-fork-engagement-face portion 355 which abuts one of the two prongs 342 of the rear-wheel-fork 340 when the single-rear-cover 350 is closed and which is displaced apart from the one of the two prongs of the rear-wheel-fork 340 when the single-rear-cover 350 is opened. Accordingly, the locking mechanism 360 may be configured to releasably lock the single-rear-cover 350 to the rear-wheel-fork 340 via the abutment of the wheel-fork-engagement-face portion 355 with the one of the two prongs 342 of the rear-wheel-fork 340 when the single rear cover 350 is closed. According to various embodiments, the lockset 362 with the locking pin 364 may be located on the single-rear-cover 350 in a manner such that the locking pin 364 may be perpendicular to the wheel-fork-engagement-face 355 so as to be extendable for inserting into and retractable for withdrawing from the pin hole 366 in the one of the two prongs 342 of the rear-wheel-fork 340 when in abutment with said prong 342 of the rear-wheel-fork 340. According to various embodiments, the wheel-fork-engagement-face 355 may be an inner face of the one of the pair of wheel-fork-guards 359 which houses the locket 362.

According to various embodiments, the locking mechanism 360 may be configured to be auto-locking. According to various embodiments, the locking pin 364 of the lockset 362 may be biased or spring biased to favour a locking position of the locking pin 364. According to various embodiments, a locking tip 365 of the locking pin 364 may be configured in a manner such that, when the single-rear-cover 350 is closing, the closing action may cause the locking pin 364 to retract so as to move the single-rear-cover 350 from the opened disposition into the closed disposition. Once the single-rear-cover 350 is in the closed disposition, the locking pin 364 may be biased outward so as to be extended for inserting into the pin hole 366 automatically to lock the single-rear-cover 350 in place. According to various embodiments, to unlock the single-rear-cover 350, the locking mechanism 360 may be manually operated, for example via a key, to retract the locking pin 364 such that the single-rear-cover 350 may be moved from the closed disposition into the opened disposition.

According to various embodiments, the locking tip 365 of the locking pin 364 may be chamfered in a manner such that the closing action of the single-rear-cover 350 may slide the chamfered surface of the locking tip 365 against an edge of the one of the two prongs 142 of the rear-wheel-fork 340 so as to cause the locking pin 366 to be retracted into the lockset 362. According to various embodiments, the locking tip 365 of the locking pin 364 may be chamfered at a lower portion of the locking tip 365 and an upper portion of the locking tip 365 may remain straight.

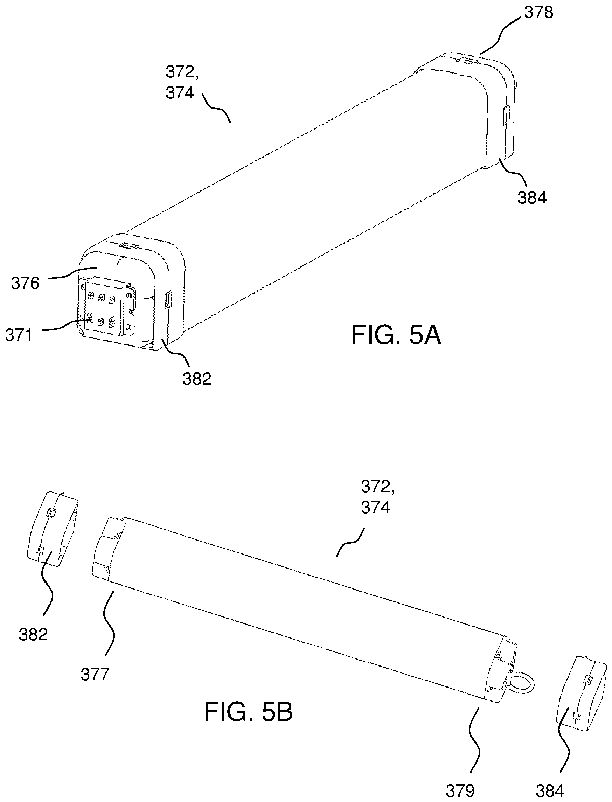

Referring back to FIG. 3E and FIG. 3F, according to various embodiments, the electric personal mobility device 300 may include a first elongate battery 372 inserted in the first longitudinal-internal-battery-compartment 332 and a second elongate battery 374 inserted in the second longitudinal-internal-battery-compartment 334. FIG. 5A, FIG. 5B, and FIG. 5C show various views of each of the first and second elongate batteries 372, 374 according to various embodiments. As shown, each of the first and second elongate batteries 372, 374 may include a first end face 376 and a second end face 378. According to various embodiments, the first end face 376 of respective elongate battery 372, 374 may include connecting elements 371. According to various embodiments, the connecting elements may be contact pins, contact pads, contact slots or any suitable elements for connecting the respective first and second elongate batteries 372, 374 to respective electrical and/or electronic modules or circuits.

FIG. 5B shows an exploded view of each of the first and second elongate batteries 372, 374 according to various embodiments. According to various embodiments, each of the first and second elongate batteries 372, 374 may include a first lubricating member 382 fixedly surround a first end portion 377 of the respective elongate battery 372, 374 and a second lubricating member 384 fixedly surround a second end portion 379 of the respective elongate battery 372, 374. Accordingly, the first lubricating member 382 may be wrapped around the first end portion 377 of the respective elongate battery 372, 374 and the second lubricating member 384 may be wrapped around the second end portion 379 of the respective elongate battery 372, 374. According to various embodiments, each of the first and second lubricating members 382, 384 may be in the form of a sleeve. Accordingly, the respective first and second lubricating members 382, 384 may be fitted over the respective first and second end portions 377, 379 so as to surround the respective first and second end portions 377, 379. According to various embodiments, each of the first and second lubricating members 382, 384 may be made of self-lubricating material. Further, according to various embodiments, the materials of each of the first and second lubricating members 382, 384 may also be an electrical insulating material. According to various embodiments, each of the first and second lubricating members 382, 384 may form a circumferential bulge around the respective first and second end portions 377, 379 such that only the first and second lubricating members 382, 384 of the respective first and second elongate batteries 372, 374 may be in contact with the walls of the respective first and second longitudinal-internal-battery-compartments 332, 334. According to various embodiments, each of the first and second lubricating members 382, 384 may be configured to be removable such that it may be replaced for easy maintenance. According to various embodiments, the first lubricating member 382 and the second lubricating member 382 may be identical such that they may be interchangeable.

FIG. 5C shows a second face 378 of each of the first and second elongate batteries 372, 374 according to various embodiments. According to various embodiments, each of the first and second elongate batteries 372, 374 may include a pivotable pull ring 386 disposed on the second face 378 of the respective elongate battery 372, 374. According to various embodiments, the pull ring 386 may be configured to be pivotable with respect to the second face 378 such that the pull ring 386 may be pivoted between a folded orientation wherein the pull ring is parallel to the second face 378 of the respective elongate battery 372, 374 and a deployed orientation wherein the pull ring 386 is perpendicular to the second face 378 of the respective elongate battery 372, 374 which may allow a finger to be inserted into the pull ring 386 for pulling out the respective elongate battery 372, 374 from the respective longitudinal-internal-battery-compartment 332, 334. According to various embodiments, the pull ring 386 may be configured to be pivoted about a pivoting axis which is tangent to a point along a circumference of the pull ring 386 connected to the second face 378 of the respective elongate battery 372, 374. According to various embodiments, the pull ring 386 may be configured to pivot with a range of angle from 0° to 180° about the pivoting axis.

According to various embodiments, each of the first and second elongate batteries 372, 374 may include a battery status indicator 388 on the second face 378 of the respective elongate battery 372, 374. According to various embodiments, the battery status indicator 388 may be a row of lights showing a strength of the respective elongate battery 372, 374 based on the number of lights being lit. According to various embodiments, the battery status indicator 388 may be a LCD screen showing a status bar or a number or a percentage representing the strength of the respective elongate battery 372, 374. According to various embodiments, the battery status indicator may be a light indicator showing different colour or different sequence/number of blinking to represent the strength of the respective elongate battery 372, 374. According to various embodiments, each of the first and second elongate batteries 372, 374 may include a battery-check-button 389. According to various embodiments, the battery status indicator 388 may show the battery status upon depressing the battery-check-button 389.

FIG. 6 shows a cross-section of the elongate hollow housing structure 330 according to various embodiments. According to various embodiments, the internal space of the elongate hollow housing structure 330 may be further partitioned to define an axial compartment 338 extending lengthwise along the elongate hollow housing 330 and between the first and second longitudinal-internal-battery-compartments 332, 334. According to various embodiments, the elongate hollow housing structure 330 may include two partitioning walls 337 partitioning the internal space of the elongate hollow housing structure 330 into three separate compartments, namely the first longitudinal-internal-battery-compartment 332, the second longitudinal-internal-battery-compartment 334 and the axial compartment 338. According to various embodiments, the three separate compartments may be parallel to each other in the lengthwise direction with the axial compartment 338 in the middle, the first longitudinal-internal-battery-compartment 332 on one side of the axial compartment 338 and the second longitudinal-internal-battery-compartment 334 on a second opposite side of the axial compartment 338.

According to various embodiments, the axial compartment 338 may be configured to house wiring, circuits and electronic components. According to various embodiments, a section of the ceiling panel portion 333 directly above the axial compartment 338 may be strengthened. According to various embodiments, a thickness of the section of the ceiling panel portion 333 directly above the axial compartment 338 may be thicker than other parts of the elongate hollow housing structure 330. According to various embodiments, the two partitioning walls 337 may also be strengthened. According to various embodiments, a thickness of the two partitioning walls 337 may be configured to be similar to that of the section of the ceiling panel portion 333 directly above the axial compartment 338.

According to various embodiments, the elongate hollow housing structure 330 may include one or more elongate voids 339 extending lengthwise within a ceiling panel portion 333, a floor panel portion 331, a side wall 335a, 335b, a partitioning wall 337 or any combination thereof. According to various embodiments, the elongate hollow housing structure 330 may include one or more elongate voids 339 extending lengthwise within the section of the ceiling panel portion 333 directly above the axial compartment 338 and the partitioning walls 337.

According to various embodiments, the elongate hollow housing structure 330 may include two or more longitudinal ribs 328 extending lengthwise along an underneath exterior surface of the elongate hollow housing structure 330. According to various embodiments, each of the two or more longitudinal ribs 328 may be aligned to a corresponding partitioning wall 337 of the elongate hollow housing structure 330.

Referring back to FIG. 3C, according to various embodiments, the elongate hollow housing structure 330 may include a kickstand 329 mounted on the underneath of the elongate hollow housing structure 330.

According to various embodiments, there may be provided a swappable battery charging station in the form of a standalone charging rack configured to charge multiple batteries 372, 374 at the same time. According to various embodiments, the swappable battery charging station may be configured to support multiple batteries 372, 374 to charge at the same time. According to various embodiments, the swappable battery charging station may be configured for ease to use and small size. According to various embodiments, swappable battery charging station may be configured to support fast charging. According to various embodiments, the swappable battery charging station may be configured to have changeable connector so as to support multiple types of batteries.

According to various embodiments, the electric personal mobility device 100, 200, 300 may be provided in a personal mobility device sharing system. According to various embodiments, the sharing system may include a plurality of electric personal mobility device 100, 200, 300 deployed in multiple locations for registered riders to easily rent it onsite via networked application (e.g. mobile application, etc.) so as to use the personal mobility device as a mode of transportation. According to various embodiments, the sharing system may include a battery charging station configured to charge standalone batteries removed from the plurality of electric personal mobility device 100, 200, 300. Accordingly, the plurality of electric personal mobility device 100, 200, 300 in the sharing system may be recharged via fast swapping of batteries which may reduce the downtime of the plurality of electric personal mobility device 100, 200, 300.

Various embodiments have provided efficient and safe solution for the electric scooter operators to address the battery charging issue. Various embodiments have provided an electric personal mobility device for used in a personal mobility device sharing system which allows easy swapping of batteries in the field with minimum downtime of the electric personal mobility device.

While the invention has been particularly shown and described with reference to specific embodiments, it should be understood by those skilled in the art that various changes, modification, variation in form and detail may be made therein without departing from the scope of the invention as defined by the appended claims. The scope of the invention is thus indicated by the appended claims and all changes which come within the meaning and range of equivalency of the claims are therefore intended to be embraced.

## Claims

1. An electric personal mobility device (100, 200, 300), comprising:
a main body (110, 310) including a rider-support-platform structure (112, 312) and a steering column (114, 314) coupled to the rider-support-platform structure (112, 312); and
a wheel arrangement (120, 320) supporting the main body(110, 310), the wheel arrangement (120, 320) having at least one front wheel (124, 324) and at least one rear wheel (122, 322), wherein the at least one front wheel (124, 324) is configured to be steerable by the steering column (114, 314),
wherein the rider-support-platform structure (112, 312) comprises
an elongate hollow housing structure (130, 330) enclosing an internal space partitioned to define a first and second longitudinal-internal-battery-compartments (132, 332, 134, 334), each longitudinal-internal-battery-compartment (132, 332, 134, 334) extending lengthwise along respective longitudinal side of the elongate hollow housing (130, 330) and having a respective rear opening (132a, 332a, 134a, 334a) at an aft portion (136, 336) of the elongate hollow housing structure (130, 330),
a rear-wheel-fork (140, 340) fixedly extending longitudinally from the aft portion (136, 336) of the elongate hollow housing structure (130, 330) between the rear openings (132a, 332a, 134a, 334a) of the first and second longitudinal-internal-battery-compartments (132, 332, 134, 334), the rear-wheel-fork (140, 340) holding the at least one rear wheel (122, 322),
**characterised in that** the rider-support-platform (112, 312) further comprises a single-rear-cover (250, 350) openable and closeable relative the rear openings (132a, 332a, 134a, 334a) of the first and second longitudinal-internal-battery-compartments (132, 332, 134, 334), the single-rear-cover (250, 350) comprising
a first and second closure portions (252, 352, 254, 354) corresponding to the respective rear openings (132a, 332a, 134a, 334a) of the first and second longitudinal-internal-battery-compartments (132, 332, 134, 334) so as to simultaneously engage with the respective rear openings (132a, 332a, 134a, 334a) to conceal the respective rear openings (132a, 332a, 134a, 334a) when the single-rear-cover (250, 350) is closed and to simultaneously disengage from the respective rear openings (132a, 332a, 134a, 334a) to expose the respective rear openings (132a, 332a, 134a, 334a) when the single-rear-cover (250, 350) is opened.

2. The device as claimed in claim 1, wherein the single-rear-cover (250, 350) is pivotably coupled to the elongate hollow housing structure (130, 330).

3. The device as claimed in claim 1 or 2, wherein the rider-support-platform structure (112, 312) further comprises a locking mechanism (360) configured to releasably lock the single-rear-cover (250, 350) when the single-rear-cover (250, 350) is closed.

4. The device as claimed in claim 3, wherein the single-rear-cover (250, 350) further comprises a wheel-fork-engagement-face portion (355) which abuts the rear-wheel-fork (140, 340) when the single-rear-cover (250, 350) is closed and which is displaced apart from the rear-wheel-fork (140, 340)when the single-rear-cover (250, 350) is opened, and wherein the locking mechanism (360) is configured to releasably lock the single-rear-cover (250, 350) to the rear-wheel-fork (140, 340) via the abutment of the wheel-fork-engagement-face portion (355) with the rear-wheel-fork (140, 340) when the single rear cover (250, 350) is closed.

5. The device as claimed in any one of claims 1 to 4, wherein the internal space of the elongate hollow housing structure (130, 330) is further partitioned to define an axial compartment (338) extending lengthwise along the elongate hollow housing structure (130, 330) and between the first and second longitudinal-internal-battery-compartments (132, 332, 134, 334).

6. The device as claimed in any one of claim 1 to 5, wherein the elongate hollow housing structure (130, 330) comprises one or more elongate voids (339) extending lengthwise within a ceiling panel portion (133, 333), a floor panel portion (131, 331), a side wall (335a, 335b), a partitioning wall (137, 337) or any combination thereof.

7. The device as claimed in any one of claim 1 to 6, wherein the elongate hollow housing structure (130, 330) comprises two or more longitudinal ribs (328) extending lengthwise along an underneath exterior surface of the elongate hollow housing structure (130, 330), preferably, wherein each of the two or more longitudinal ribs (328) is aligned to a corresponding partitioning wall (137, 337) of the elongate hollow housing structure (130, 330).

8. The device as claimed in any one of claim 1 to 7, further comprising a first elongate battery (372) inserted in the first longitudinal-internal-battery-compartment (132, 332) and a second elongate battery (374) inserted in the second longitudinal-internal-battery-compartment (134, 334), each of the first and second elongate batteries (372, 374) comprises a first end face (376) and a second end face (378), wherein the first end face (376) of respective elongate battery (372, 374) comprises connecting elements (371).

9. The device as claimed in claim 8, wherein each of the first and second elongate batteries (372, 374) comprises a first lubricating member (382) fixedly surround a first end portion (377) of respective elongate battery (372, 374) and a second lubricating member (384) fixedly surround a second end portion (379) of the respective elongate battery (372, 374).

10. The device as claimed in claim 9, wherein each of the first and second lubricating members (382, 384) is in the form of a sleeve and is made of self-lubricating material.

11. The device as claimed in any one of claim 8 to 10, wherein each of the first and second elongate batteries (372, 374) comprises a pivotable pull ring (386) disposed on the second face (378) of the respective elongate battery (372, 374).

12. The device as claimed in any one of claims 8 to 11, wherein each of the first and second elongate batteries (372, 374) comprises a battery status indicator (388) on the second face (378) of the respective elongate battery (372, 374).

13. A personal mobility device sharing system comprising
the electric personal mobility device according to any one of claims 8 to 12; and
a battery charging station configured to charge at least one of the first elongate battery and the second elongate battery removed from the electric personal mobility device.

14. A method of operating a personal mobility device sharing system comprising
providing the electric personal mobility device (100, 200, 300) according to any one of claims 8 to 12; and
performing battery charging of at least one of the first elongate battery (372) and the second elongate battery (374) removed from the electric personal mobility device (100, 200, 300) at a battery charging station.

## Patentansprüche

1. Eine elektrische persönliche Mobilitätseinrichtung (100, 200, 300), aufweisend:
einen Hauptkörper (110, 310), der eine Fahrerunterstützungsplattformstruktur (112, 312) und eine Lenksäule (114, 314) aufweist, die mit der Fahrerunterstützungsplattformstruktur (112, 312) verbunden ist; und
eine Radaufhängung (120, 320), die den Hauptkörper (110, 310) unterstützt, wobei die Radaufhängung (120, 320) mindestens ein Vorderrad (124, 324) und mindestens ein Hinterrad (122, 322) hat, wobei das mindestens eine Vorderrad (124, 324) konfiguriert ist, um über die Lenksäule (114, 314) steuerbar zu sein,
wobei die Fahrerunterstützungsplattformstruktur (112, 312) aufweist
eine längliche hohle Gehäusestruktur (130, 330), die einen Innenraum einschliesst, der unterteilt ist um ein erstes und zweites längslaufend-internes Batteriefach (132, 332, 134, 334) zu definieren, wobei sich jedes längslaufend-interne Batteriefach (132, 332, 134, 334) längs entlang der jeweiligen längslaufenden Seite des länglichen hohlen Gehäuses (130, 330) erstreckt und eine entsprechende hintere Öffnung (132a, 332a, 134a, 334a) an einem hinteren Bereich (136, 336) der länglichen hohlen Gehäusestruktur (130, 330) aufweist,
eine Hinterradgabel (140, 340), die sich längslaufend vom hinteren Bereich (136, 336) der länglichen hohlen Gehäusestruktur (130, 330) zwischen den hinteren Öffnungen (132a, 332a, 134a, 334a) der ersten und zweiten längslaufend-internen Batteriefächer (132, 332, 134, 334) fest erstreckt, wobei die Hinterradgabel (140, 340) das mindestens eine Hinterrad (122, 322) hält,
dadurch charakterisiert, dass die Fahrerunterstützungsplattform (112, 312) ferner eine einzige hintere Abdeckung (250, 350) aufweist, die sich relativ zu den hinteren Öffnungen (132a, 332a, 134a, 334a) der ersten und zweiten längslaufend-internen Batteriefächer (132, 332, 134, 334) öffnen und verschließen lässt, wobei die einzige hintere Abdeckung (250, 350)
einen ersten und zweiten Verschlussabschnitt (252, 352, 254, 354) aufweist, die den jeweiligen hinteren Öffnungen (132a, 332a, 134a, 334a) der ersten und zweiten längslaufend-internen Batteriefächer (132, 332, 134, 334) entsprechen, um gleichzeitig mit den jeweiligen hinteren Öffnungen (132a, 332a, 134a, 334a) ineinanderzugreifen, um die jeweiligen hinteren Öffnungen (132a, 332a, 134a, 334a) zu verdecken, wenn die einzige hintere Abdeckung (250, 350) geschlossen ist, und sich gleichzeitig von den jeweiligen hinteren Öffnungen (132a, 332a, 134a, 334a) zu entkuppeln, um die jeweiligen hinteren Öffnungen (132a, 332a, 134a, 334a) freizulegen, wenn die einzige hintere Abdeckung (250, 350) geöffnet ist.

2. Die Einrichtung gemäß Anspruch 1, wobei die einzige hintere Abdeckung (250, 350) drehbar mit der länglichen hohlen Gehäusestruktur (130, 330) verbunden ist.

3. Die Einrichtung gemäß Anspruch 1 oder 2, wobei die Fahrerunterstützungsplattformstruktur (112, 312) ferner einen Verriegelungsmechanismus (360) aufweist, der konfiguriert ist, um die einzige hintere Abdeckung (250, 350) lösbar zu verriegeln, wenn die einzige hintere Abdeckung (250, 350) geschlossen ist.

4. Die Einrichtung gemäß Anspruch 3, wobei die einzige hintere Abdeckung (250, 350) ferner einen Radgabel-Eingriffsflächenabschnitt (355) aufweist, der an der Hinterradgabel (140, 340) angrenzt, wenn die einzige hintere Abdeckung (250, 350) geschlossen ist, und der von der Hinterradgabel (140, 340) entfernt versetzt ist, wenn die einzige hintere Abdeckung (250, 350) geöffnet ist, und wobei der Verriegelungsmechanismus (360) konfiguriert ist, um die einzige hintere Abdeckung (250, 350) über die Angrenzung des Radgabel-Eingriffsflächenabschnitts (355) mit der Hinterradgabel (140, 340) lösbar mit der Hinterradgabel (140, 340) zu verriegeln, wenn die einzige hintere Abdeckung (250, 350) geschlossen ist.

5. Die Einrichtung gemäß einem der Ansprüche 1 bis 4, wobei der Innenraum der länglichen hohlen Gehäusestruktur (130, 330) ferner unterteilt ist, um ein axiales Fach (338) zu definieren, das sich längs entlang der länglichen hohlen Gehäusestruktur (130, 330) und zwischen den ersten und zweiten längslaufend-internen Batteriefächern (132, 332, 134, 334) erstreckt.

6. Die Einrichtung gemäß einem der Ansprüche 1 bis 5, wobei die längliche hohle Gehäusestruktur (130, 330) eine oder mehrere längliche Hohlräume (339) aufweist, die sich längs innerhalb eines Deckenplattenabschnitts (133, 333), eines Bodenplattenabschnitts (131, 331), einer Seitenwand (335a, 335b), einer Trennwand (137, 337) oder einer Kombination davon erstrecken.

7. Die Einrichtung gemäß einem der Ansprüche 1 bis 6, wobei die längliche hohle Gehäusestruktur (130, 330) zwei oder mehr längsverlaufende Rippen (328) aufweist, die sich längs entlang einer unteren Außenfläche der länglichen hohlen Gehäusestruktur (130, 330) erstrecken, vorzugsweise wobei jede der zwei oder mehr längsverlaufenden Rippen (328) zu einer entsprechenden Trennwand (137, 337) der länglichen hohlen Gehäusestruktur (130, 330) ausgerichtet ist.

8. Die Einrichtung gemäß einem der Ansprüche 1 bis 7, ferner aufweisend eine erste längliche Batterie (372), die in das erste längslaufend-interne Batteriefach (132, 332) eingesetzt ist, und eine zweite längliche Batterie (374), die in das zweite längslaufend-interne Batteriefach (134, 334) eingesetzt ist, wobei jede der ersten und zweiten länglichen Batterien (372, 374) eine erste Endfläche (376) und eine zweite Endfläche (378) aufweist, wobei die erste Endfläche (376) der jeweiligen länglichen Batterie (372, 374) Verbindungselemente (371) aufweist.

9. Die Einrichtung gemäß Anspruch 8, wobei jede der ersten und zweiten länglichen Batterien (372, 374) ein erstes Gleitmittelteil (382) aufweist, das einen ersten Endabschnitt (377) der jeweiligen länglichen Batterie (372, 374) fest umschließt, und ein zweites Gleitmittelteil (384), das einen zweiten Endabschnitt (379) der jeweiligen länglichen Batterie (372, 374) fest umschließt.

10. Die Einrichtung gemäß Anspruch 9, wobei jedes der ersten und zweiten Gleitmittelteile (382, 384) in Form einer Hülse vorliegt und aus selbstgleitendem Material besteht.

11. Die Einrichtung gemäß einem der Ansprüche 8 bis 10, wobei jede der ersten und zweiten länglichen Batterien (372, 374) einen drehbaren Zugring (386), der auf der zweiten Endfläche (378) der jeweiligen länglichen Batterie (372, 374) angeordnet ist, aufweist.

12. Die Einrichtung gemäß einem der Ansprüche 8 bis 11, wobei jede der ersten und zweiten länglichen Batterien (372, 374) einen Batteriestatusanzeiger (388) auf der zweiten Endfläche (378) der jeweiligen länglichen Batterie (372, 374) aufweist.

13. Ein persönliches Mobilitätseinrichtungs-Sharing-System aufweisend:
die elektrische persönliche Mobilitätseinrichtung gemäß einem der Ansprüche 8 bis 12; und
eine Batterieladestation, die dazu konfiguriert ist, mindestens eine der ersten länglichen Batterie und der zweiten länglichen Batterie, die aus der elektrischen persönlichen Mobilitätseinrichtung entfernt wurde, aufzuladen.

14. Ein Verfahren zum Betrieb eines persönlichen Mobilitätseinrichtungs-Sharing-Systems aufweisend:
Bereitstellen der elektrischen persönlichen Mobilitätseinrichtung (100, 200, 300) gemäß einem der Ansprüche 8 bis 12; und
Durchführen des Batterieladens von mindestens einer der ersten länglichen Batterie (372) und der zweiten länglichen Batterie (374), die aus der elektrischen persönlichen Mobilitätseinrichtung (100, 200, 300) entfernt wurde, an einer Batterieladestation.

## Revendications

1. Dispositif de mobilité personnelle électrique (100, 200, 300), comprenant :
un corps principal (110, 310) comprenant une structure de plate-forme de support d'utilisateur (112, 312) et une colonne de direction (114, 314) couplée à la structure de plate-forme de support d'utilisateur (112, 312) ; et
un agencement de roues (120, 320) supportant le corps principal (10, 310), l'agencement de roues (120, 320) ayant au moins une roue avant (124, 324) et au moins une roue arrière (122, 322), dans lequel ladite au moins une roue avant (124, 324) est configurée pour être dirigeable par la colonne de direction (114, 314),
dans lequel la structure de plate-forme de support d'utilisateur (112, 312) comprend :
une structure de logement creux allongé (130, 330) renfermant un espace interne partitionné pour définir des premier et deuxième compartiments de batterie interne longitudinaux (132, 332, 134, 334), chaque compartiment de batterie interne longitudinal (132, 332, 134, 334) s'étendant dans le sens de la longueur le long du côté longitudinal respectif du logement creux allongé (130, 330) et ayant une ouverture arrière respective (132a, 332a, 134a, 334a) à une partie arrière (136, 336) de la structure de logement creux allongé (130, 330),
une fourche de roue arrière (140, 340) s'étendant de manière fixe et longitudinale à partir de la partie arrière (136, 336) de la structure de logement creux allongé (130, 330) entre les ouvertures arrière (132a, 332a, 134a, 334a) des premier et deuxième compartiments de batterie interne longitudinaux (132, 332, 134, 334), la fourche de roue arrière (140, 340) retenant ladite au moins une roue arrière (122, 322),
**caractérisé en ce que** la plate-forme de support d'utilisateur (112, 312) comprend en outre un couvercle arrière unique (250, 350) pouvant être ouvert et fermé par rapport aux ouvertures arrière (132a, 332a, 134a, 334a) des premier et deuxième compartiments de batterie interne longitudinaux (132, 332, 134, 334), le couvercle arrière unique (250, 350) comprenant :
des première et deuxième parties de fermeture (252, 352, 254, 354) correspondant aux ouvertures arrière respectives (132a, 332a, 134a, 334a) des premier et deuxième compartiments de batterie interne longitudinaux (132, 332, 134, 334) de manière à venir en prise simultanément avec les ouvertures arrière respectives (132a, 332a, 134a, 334a) pour dissimuler les ouvertures arrière respectives (132a, 332a, 134a, 334a) lorsque le couvercle arrière unique (250, 350) est fermé et pour venir hors prise simultanément des ouvertures arrière respectives (132a, 332a, 134a, 334a) afin d'exposer les ouvertures arrière respectives (132a, 332a, 134a, 334a) lorsque le couvercle arrière unique (250, 350) est ouvert.

2. Dispositif selon la revendication 1, dans lequel le couvercle arrière unique (250, 350) est couplé de manière pivotante à la structure de logement creux allongé (130, 330) .

3. Dispositif selon la revendication 1 ou 2, dans lequel la structure de plateforme de support d'utilisateur (112, 312) comprend en outre un mécanisme de verrouillage (360) configuré pour verrouiller de manière amovible le couvercle arrière unique (250, 350) lorsque le couvercle arrière unique est fermé.

4. Dispositif selon la revendication 3, dans lequel le couvercle arrière unique (250, 350) comprend en outre une partie face de prise roue-fourche (355) qui vient en butée contre la fourche de roue arrière (140, 340) lorsque le couvercle arrière unique (250, 350) est fermé et qui est déplacée pour s'éloigner de la fourche de roue arrière (140, 340) lorsque le couvercle arrière unique (250, 350) est ouvert, et dans lequel le mécanisme de verrouillage (360) est configuré pour verrouiller de manière amovible le couvercle arrière unique (250, 350) à la fourche de roue arrière (140, 340) par la mise en butée de la partie de face de prise roue-fourche (355) avec la fourche de roue arrière (140, 340) lorsque le couvercle arrière unique (250, 350) est fermé.

5. Dispositif selon l'une quelconque des revendications 1 à 4, dans lequel l'espace interne de la structure de logement creux allongé (130, 330) est en outre divisé pour définir un compartiment axial (338) s'étendant dans le sens de la longueur le long de la structure de logement creux allongé (130, 330) et entre les premier et deuxième compartiments de batterie interne longitudinaux (132, 332, 134, 334) .

6. Dispositif selon l'une quelconque des revendications 1 à 5, dans lequel la structure de logement creux allongé (130, 330) comprend un ou plusieurs vides allongés (339) s'étendant dans le sens de la longueur à l'intérieur d'une partie de panneau de plafond (133, 333), une partie de panneau de plancher (131, 331), une paroi latérale (335a, 335b), une paroi de séparation (137, 337) ou une combinaison quelconque de ceux-ci.

7. Dispositif selon l'une quelconque des revendications 1 à 6, dans lequel la structure de logement creux allongé (130, 330) comprend deux ou plusieurs nervures longitudinales (328) s'étendant dans le sens de la longueur le long d'une surface extérieure inférieure de la structure de logement creux allongé (130, 330), dans lequel, de préférence, chacune des deux ou plusieurs nervures longitudinales (328) est alignée sur une paroi de séparation correspondante (137, 337) de la structure de logement creux allongé (130, 330).

8. Dispositif selon l'une quelconque des revendications 1 à 7, comprenant en outre une première batterie allongée (372) insérée dans le premier compartiment de batterie interne longitudinal (132, 332) et une deuxième batterie allongée (374) insérée dans le deuxième compartiment de batterie interne longitudinal (134, 334), chacune des première et deuxième batteries allongées (372, 374) comprenant une première face d'extrémité (376) et une deuxième face d'extrémité (378), la première face d'extrémité (376) de la batterie allongée respective (372, 374) comprenant des éléments de connexion (371).

9. Dispositif selon la revendication 8, dans lequel chacune des première et deuxième batteries allongées (372, 374) comprend un premier élément lubrifiant (382) entourant de manière fixe une première partie d'extrémité (377) de la batterie allongée respective (372, 374) et un deuxième élément lubrifiant (384) entourant de manière fixe une deuxième partie d'extrémité (379) de la batterie allongée respective (372, 374).

10. Dispositif selon la revendication 9, dans lequel chacun des premier et deuxième éléments lubrifiants (382, 384) se présente sous la forme d'un manchon et est constitué d'un matériau autolubrifiant.

11. Dispositif selon l'une quelconque des revendications 8 à 10, dans lequel chacune des première et deuxième batteries allongées (372, 374) comprend un anneau de traction pivotant (386) disposé sur la deuxième face (378) de la batterie allongée respective (372, 374).

12. Dispositif selon l'une quelconque des revendications 8 à 11, dans lequel chacune des première et deuxième batteries allongées (372, 374) comprend un indicateur d'état de batterie (388) sur la deuxième face (378) de la batterie allongée respective (372, 374).

13. Système de partage de dispositif de mobilité personnelle, comprenant :
le dispositif de mobilité personnelle électrique selon l'une quelconque des revendications 8 à 12 ; et
une station de chargement de batterie configurée pour charger au moins l'une de la première batterie allongée et de la deuxième batterie allongée retirées du dispositif de mobilité personnelle électrique.

14. Procédé de fonctionnement d'un système de partage de dispositif de mobilité personnelle, comprenant :
la fourniture du dispositif de mobilité personnelle électrique (100, 200, 300) selon l'une quelconque des revendications 8 à 12 ; et
l'exécution du chargement de batterie d'au moins l'une de la première batterie allongée (372) et de la deuxième batterie allongée (374) retirées du dispositif de mobilité personnelle électrique (100, 200, 300) à une station de chargement de batterie.
